# EUROPEAN PATENT SPECIFICATION

(11) **EP 3 990 372 B1**
(45) Date of publication and mention of the grant of the patent: **03.01.2024**
(21) Application number: 20785853.1
(22) Date of filing: 01.09.2020
(51) Int. Cl.: B65G 1/14, B65D 19/38, B65D 19/44, B65D 21/02, B65D 88/02, B65D 88/12, B65D 88/52

(54) **STRUCTURE FOR STACKING MOVABLE CONTAINERS**
STRUKTUR ZUM STAPELN VON BEWEGLICHEN BEHÄLTERN
STRUCTURE POUR EMPILER DES RÉCIPIENTS MOBILES

(30) Priority: 02.10.2019 IT 201900017693
(43) Date of publication of application: 04.05.2022
(73) Proprietor: Indennidate, Giuseppina, 73043 Copertino (LE) (IT)
(72) Inventor: INDENNIDATE, Alessio Giovanni, 47922 Rimini (RN) (IT); INDENNIDATE, Giuseppina, 73043 Copertino (LE) (IT)
(74) Representative: Mozzanica, Luca
(86) International application number: PCT/IT2020/050213
(87) International publication number: WO 2021/064757

(56) References cited:
- EP-A1- 0 505 295
- EP-A2- 0 304 698
- JP-A- 2010 222 105
- SU-A1- 921 983

## Description

### Field of application of the invention

The present invention applies to the field of goods transportation, specifically road and rail transportation.

As known, to transport goods from one place to another, placing goods in specific transport units which may be transferred from one vehicle to another may be advantageous. Among the transport units of this type, the most common are containers, also referred to as shipping containers, and movable containers, also referred to swap bodies. Like containers, movable containers substantially are rectangular parallelepipeds but unlike the latter, are not stackable. The walls of the movable containers indeed are generally sheeted and are supported by a frame which is not sufficiently robust to allow stacking several movable containers. To avoid any misunderstanding, the foregoing also applies is the movable containers have rigid walls.

In particular, the present invention relates to a structure adapted to allow stacking movable containers.

### Overview of the background art

As mentioned above, movable containers are provided with a frame which is not sufficiently robust to allow stacking them, regardless of whether they have sheeted or rigid walls.

The Applicant is not aware of any device adapted to allow stacking movable containers.

SU 921 983 A1 discloses a structure for stacking objects, said structure comprising:
- a base including at least three support points lying on a substantially horizontal plane and at which said base can rest on a flat surface;
- at least three uprights each of which connected to said base by means of first connection means, at a first end thereof, each of said uprights comprising a first support base at a second end of said upright opposite to said first end;
- for each of said uprights, said first connection means being adapted to allow a rotation of said upright with respect to said base about a substantially horizontal axis;
- for each of said uprights, an arm protruding from said upright and integrally connected to the latter at a first end thereof; each of said uprights being rotatable by means of said first connection means, between:
- a first stacking position in which, when all said uprights are in said stacking position, said first support bases are placed at the vertices of a first triangle lying on a substantially horizontal plane, respectively, each of said uprights being connected to said base by means of said first connection means, so that, when all said uprights are in said stacking position, said first support bases lie on an opposite side of said base with respect to said support points, so that, when all said uprights are in said stacking position, another structure according to the present claim can rest on said first support bases at least at said support points of the base of said other structure, and
- a second loading position.

### Objects of the invention

It is the object of the present invention to overcome the aforesaid drawbacks by indicating a structure for stacking movable containers.

### Summary and advantages of the invention

The present invention relates to a structure to allow stacking objects, preferably substantially rectangular parallelepipeds, such as movable containers, for example,
said structure comprising:
- a base including at least three support points lying on a substantially horizontal plane and at which said base can rest on a flat surface;
- at least three uprights each of which connected to said base by means of first connection means, at a first end thereof (of said upright),
   each of said uprights comprising a first support base at a second end of said upright opposite to said first end;
- for each of said uprights, said first connection means being adapted to allow a rotation of said upright with respect to said base about a substantially horizontal axis;
- for each of said uprights, an arm protruding from said upright and integrally connected to the latter at a first end thereof (of said arm);
- for each of said arms, a second support base connected to said arm at a second end of the latter opposite to the first end of said arm;
each of said uprights being rotatable by means of said first connection means, between:
- a first stacking position in which, when all said uprights are in said stacking position, said first support bases are placed at the vertices of a first triangle lying on a substantially horizontal plane, respectively,
each of said uprights being connected to said base by means of said first connection means, so that, when all said uprights are in said stacking position, said first support bases lie on an opposite side of said base with respect to said support points, so that, when all said uprights are in said stacking position, another structure according to the present invention can rest on said first support bases at least at said support points of the base of said other structure,
and
- a second loading position in which, when all said uprights are in said loading position, said second support bases are placed at the vertices of a second triangle lying on a substantially horizontal plane, respectively, so that an object, such as a movable container, for example, can be accommodated in said structure, between said uprights, resting on said second support bases, when all said uprights are in said loading position, said first and second support bases further being positioned so that a triangle having three points as vertices, which can be obtained by projecting said first support bases orthogonally on said plane where said second triangle lies (at the vertices of which said second support bases are placed), contains said second triangle therein,

in each of said uprights, said first connection means being positioned with respect to said first and second support bases, so that said upright, with the arm thereof and the first connection means thereof, acts as a first class lever for supporting an object, such as a movable container, for example, on said second support base, when all said uprights are in said loading position,
in each of said uprights, said first connection means acting as a fulcrum of said lever, so that supporting an object, such as a movable container, for example, on said second support bases when all said uprights are in said loading position generates, due to the weight of said object and for each of said uprights, a torque tending to rotate said upright, by means of said first connection means, from said loading position to said stacking position,
when all said uprights are in said stacking position, said first support bases being positioned so that, when another structure according to the present invention rests on said first support bases, the weight of said other structure on said first support bases generates, for each of said uprights, a torque tending to keep said upright in said stacking position,
when all said uprights are in said stacking position, said second support bases being positioned so that, when an object, such as a movable container, for example, rests on said second support bases, the weight of said object on said second support bases generates, for each of said uprights, a torque tending to keep said upright in said stacking position.

The structure of the invention advantageously allows stacking objects which are not stackable per se, such as movable containers, for example.

Other innovative features of the present invention are disclosed in the description below and referred to in the dependent claims.

According to an aspect of the invention, for each of said uprights, said first connection means comprise guide means adapted to allow a translation of said upright, with respect to said base, along said axis about which said upright is rotatable with respect to said base by means of said first connection means. Advantageously, according to this aspect of the invention, the position of the uprights with respect to the base is adjustable according to the volume of the object to rest on the second bases.

According to another aspect of the invention, said structure comprises, for each of said arms, second connection means by means of which the connection occurs between said arm and the second support base connected to the latter, said second connection means being adapted to allow a rotation of said second support base with respect to said arm about a substantially horizontal axis.

According to another aspect of the invention, each of said second support bases comprises a flat support surface at which an object, such as a movable container, for example, can rest on said second support base,
when all said uprights are in said loading position, said support surfaces of the second support bases being placed at the vertices of said second triangle, respectively,
each of said second support bases being shaped so that the weight of said second support base is such as to generate a torque tending to rotate said second support base, by means of said second connection means, with respect to the arm to which it is connected, so as to orient said support surface horizontally while directing it towards the opposite side with respect to said base (i.e. upwards),
the weight of each of said second support bases further being such that in the absence of an object, such as a movable container, for example, resting on said second support base, the latter rotates, due to the weight thereof and by means of said second connection means, with respect to the arm to which it is connected, so as to orient said support surface horizontally while directing it towards the opposite side with respect to said base (i.e. upwards).

According to this aspect of the invention, when the uprights switch from the stacking position to the loading position and vice versa, the second support bases advantageously rotate, due to the weight thereof, keeping the respective support surfaces arranged horizontally.

According to another aspect of the invention, said axes about which said uprights are rotatable with respect to said base by means of said first connection means lie on the same plane parallel to said (substantially horizontal) plane on which said three support points of the base lie.

According to another aspect of the invention, said axes about which two of said uprights are rotatable with respect to said base by means of said first connection means are coincident.

According to another aspect of the invention, said axes about which said uprights are rotatable with respect to said base by means of said first connection means are mutually parallel.

According to another aspect of the invention, said structure comprises a first, second, third and fourth of said uprights,
said axes about which said first and second uprights are rotatable with respect to said base by means of said first connection means being coincident,
said axes about which said third and fourth uprights are rotatable with respect to said base by means of said first connection means being coincident,
when all said uprights are in said stacking position, said first support bases being placed at the vertices of a first quadrilateral lying on a substantially horizontal plane, respectively,
when all said uprights are in said loading position, said second support bases being placed at the vertices of a second quadrilateral lying on a substantially horizontal plane, respectively,
when all said uprights are in said loading position, a quadrilateral having four points as vertices which can be obtained by projecting said first support bases orthogonally on said plane where said second quadrilateral lies (at the vertices of which said second support bases are placed) contains said second quadrilateral therein.

According to another aspect of the invention, in each of said uprights, said arm is shaped and arranged so as to abut against said base when said upright is in said stacking position,
when all said uprights are in said stacking position and another structure according to the present invention rests on said first support bases, said torque generated, for each of said uprights, by the weight of said other structure according to the present invention on said first support bases, pressing said arm against said base,
when all said uprights are in said stacking position and an object, such as a movable container, for example, rests on said second support bases, said torque generated, for each of said uprights, by the weight of said object on said second support bases pressing said arm against said base.

According to this aspect of the invention, the arms of the uprights advantageously serve as stops which block the rotation of the uprights when the latter, rotating from the loading position, reach the stacking position.

According to another aspect of the invention, each of said uprights is shaped so that, when in said stacking position, the weight of said upright is such as to generate a torque tending to rotate said upright, by means of said first connection means, from said stacking position to said loading position,
the weight of each of said uprights further being such that when said upright is in said stacking position, in the absence of an object, such as a movable container, for example, resting on said second support bases, said upright rotates, due to the weight thereof and by means of said first connection means, from said stacking position to said loading position.

Advantageously, according to this aspect of the invention, when the structure accommodates an object therein (resting on the second support bases) having sufficient weight to keep the uprights in the stacking position, upon the removal of said object from the structure, the uprights rotate due to the weight thereof, from the stacking position to the loading position.

### Brief description of the drawings

Further objects and advantages of the present invention will become apparent from the following detailed description of exemplary embodiments thereof and from the accompanying drawings, merely given by way of non-limiting example, in which:
- **Figure 1** shows a perspective and diagrammatic view of a structure for stacking objects, such as movable containers, for example, according to the present invention;
- **Figure 2** shows a front plan and diagrammatic view of the structure in Figure 1, during the accommodation of an object, such as a movable container, therein;
- **Figure 3** shows a front plan and diagrammatic view of the structure in Figure 1, upon completion of the operations for accommodating the object in Figure 2 therein.

### Detailed description of some preferred embodiments of the invention

For convenience of disclosure, in the present description reference is made only to a preferred exemplary embodiment of the invention, in which the structure is employed to allow stacking movable containers. However, the structure of the invention is not limited to the aforesaid example. It may be used to allow stacking any preferably substantially rectangular parallelepiped object.

A drawing may also be shown later in the present description with reference to elements not expressly indicated in that drawing, rather in other drawings. The scale and proportion of the various elements depicted do not necessarily correspond to the actual ones.

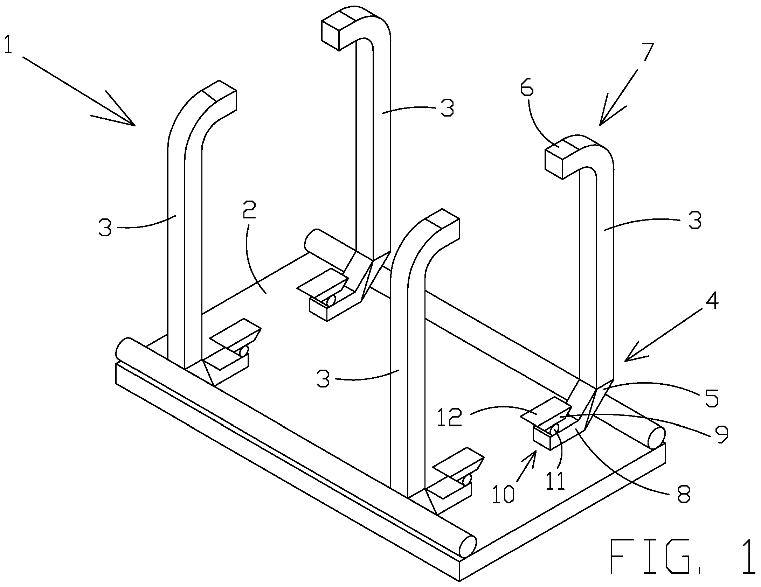

**Figure 1** shows a structure 1 of the invention which can be used to allow stacking objects, preferably substantially rectangular parallelepipeds, such as movable containers, for example.

Structure 1 comprises a base 2, preferably shaped as a substantially rectangular plate and at which structure 1 can rest on the ground or on a flat surface. Incidentally, although base 2 is preferably shaped as a plate so that it can rest on a flat surface, it may have any shape on the condition however that it includes three support points lying on a substantially horizontal plane (i.e. substantially arranged horizontally during the use of structure 1). At said three support points, base 2 can rest on the ground or on a flat surface.

Structure 1 comprises at least three uprights 3 each of which is connected to base 2 at a first end 4 thereof. Four uprights 3 are shown, by way of example, and they are preferably connected to base 2 close to the four vertices thereof on the side opposite to that where the above-mentioned support points lie (i.e. preferably on the side opposite to that where base 2 can rest on the ground or on a flat surface), respectively. The connection between each upright 3 and base 2 is preferably obtained by means of a pin 5 (previously identified by the expression "first connection means") by means of which upright 3 is rotatable about base 2 about a substantially horizontal axis (i.e. substantially arranged horizontally during the use of structure 1). The pins 5 are preferably placed at the vertices of a rectangle which sides preferably are parallel to the sides of a rectangle with which base 2 may be schematized, respectively. The axes about which the uprights 3 are rotatable preferably are coplanar, and more preferably lie on a plane parallel to said rectangle with which base 2 may be schematized (i.e. parallel to the plane, substantially arranged horizontally during the use of structure 1, on which the aforementioned support points of base 2 lie). The axes about which the uprights 3 are rotatable preferably are parallel to one another, and more preferably are two-by-two coincident. Two uprights 3 rotate, i.e. preferably but not necessarily, about the same first axis arranged parallel to a second axis about which both the other two uprights 3 rotate. By way of example, said two rotation axes of the four uprights 3 are parallel to the long edges of base 2 (i.e. to the long sides of the aforesaid rectangle with which base 2 may be schematized) and are placed close to the latter, respectively.

Each of the uprights 3 comprises a support base 6 made at a second end 7, opposite to end 4. As illustrated later in the present description, the bases 6 can be qualified as "supporting" given that if a plurality of structures 1 is arranged, the latter are stackable one on another by resting base 2 of a structure 1 on the bases 6 of the underlying structure 1. The bases 6 were previously identified by the expression "first support bases".

The uprights 3 preferably are equal to one another and each of them is preferably substantially shaped like an upside-down letter "L", with the free end of the long arm (corresponding to end 4) hinged to base 2 and the free end of the short arm ending in base 6. Each upright 3 is hinged to base 2, preferably so that both arms thereof (mutually orthogonal) are arranged orthogonally to the rotation axis of said upright 3, i.e. so as to lie, if schematized with a letter "L", on a plane orthogonal to the rotation axis thereof. Due to this, when there is a rotation by means of pin 5 thereof, each upright 3, if schematized with a letter "L", always lies on the same plane. As is worth noting in Figure 1, by schematizing the uprights 3 as respective letters "L" again, each upright 3 preferably is parallel to upright 3 rotatable about the rotation axis thereof, and preferably is coplanar to one of the two uprights 3 rotatable about the other rotation axis. The uprights 3 are further connected to base 2 preferably so that the coplanar uprights 3 face each other on the side of the concavity thereof.

Structure 1, for each upright 3, comprises a further arm 8 protruding from said upright 3 and integrally connected to the latter at a first end thereof (of said arm 8). Each arm 8 is preferably connected to the respective upright 3 at end 4 of the latter, preferably orthogonally to the aforesaid arm along the letter "L" with which it may be schematized. More preferably, each upright 3, when considered in conjunction with arm 8 to which it is connected, is preferably shaped as a letter "C", i.e. with arm 8 extending towards upright 3 which is coplanar thereto. Due to this, when there is a rotation by means of pin 5 thereof, each upright 3, in conjunction with arm 8 to which it is connected and if schematized with a letter "C", always lies on the same plane. Similarly to the foregoing and again schematizing the uprights 3 in conjunction with the arms 8 to which they are connected as respective letters "C", each upright 3, in conjunction with arm 8 to which it is connected, preferably is parallel to upright 3 rotatable about the rotation axis thereof, and preferably is coplanar to one of the two uprights 3 which are rotatable about the other rotation axis.

Since the arms 8 are integrally and respectively connected to the uprights 3, the arms 8, by means of the pins 5, are rotatable, with respect to base 2 and integrally to the uprights 3, about the same axes about which the uprights 3 are rotatable.

Preferably, the arms 8 are equal to one another. More preferably, each arm 8 is connected to the respective upright 3 so that the uprights 3 are equal to one another also when considered in conjunction with the arms 8.

Structure 1, for each arm 8, comprises a support base 9 connected to said arm 8 at a second end 10 of the latter, opposite to end 4. As disclosed later in the present description, the bases 9 can be qualified as "supporting" given that an object, such as a movable container, for example, can be accommodated in structure 1 resting on the bases 9. The latter were previously identified by the expression "second support bases".

The connection between each base 9 and the respective arm 8 is preferably obtained by means of a pin 11 by means of which said base 9 is rotatable about the respective arm 8 about a substantially horizontal axis (i.e. substantially arranged horizontally during the use of structure 1). The axis about which each base 9 is rotatable by means of the respective pin 11 preferably is parallel to the axis about which arm 8 to which said base 9 is connected (by said pin 11) is rotatable with respect to base 2 and by means of pin 5. The pins 11 were identified above by the expression "second connection means".

Preferably, the bases 9 are equal to one another, as preferably are the pins 11 (i.e. mutually equal). More preferably, each base 9 is connected to the respective arm 8 so that the uprights 3 are equal to one another also when considered in conjunction with the arms 8, bases 9 and pins 11.

As shown in Figure 1, each base 9 preferably comprises a flat support surface 12 at which an object, such as a movable container, for example, can rest on base 9. The surface 12 in each base 9 preferably lies on the side opposite to that where base 9 is connected to pin 11. In addition, each base 9 is preferably shaped so that the weight of said base 9 is such as to generate a torque tending to rotate said base 9, by means of the respective pin 11, with respect to arm 8 to which it is connected so as to orientate surface 12 horizontally while directing it to the opposite side with respect to base 2 (i.e. upwards). More specifically, the weight of each base 9 is such that in the absence of an object, such as a movable container, for example, resting on said base 9, the latter rotates, due to the weight thereof and by means of pin 11, with respect to arm 8 to which it is connected, so as to orient surface 12 horizontally while directing it towards the opposite side with respect to base 2 (i.e. upwards).

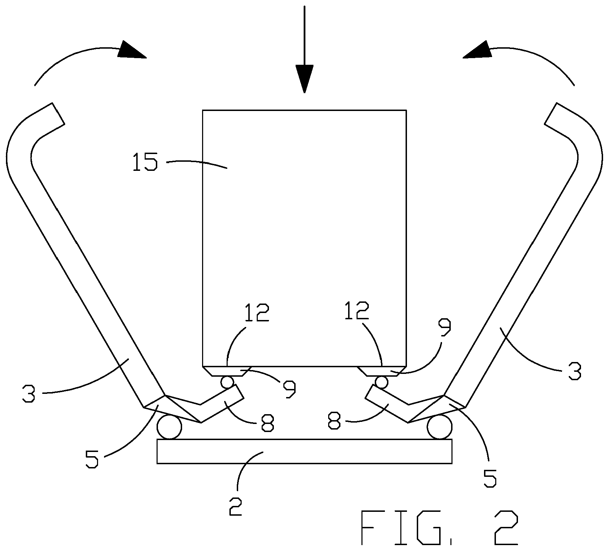

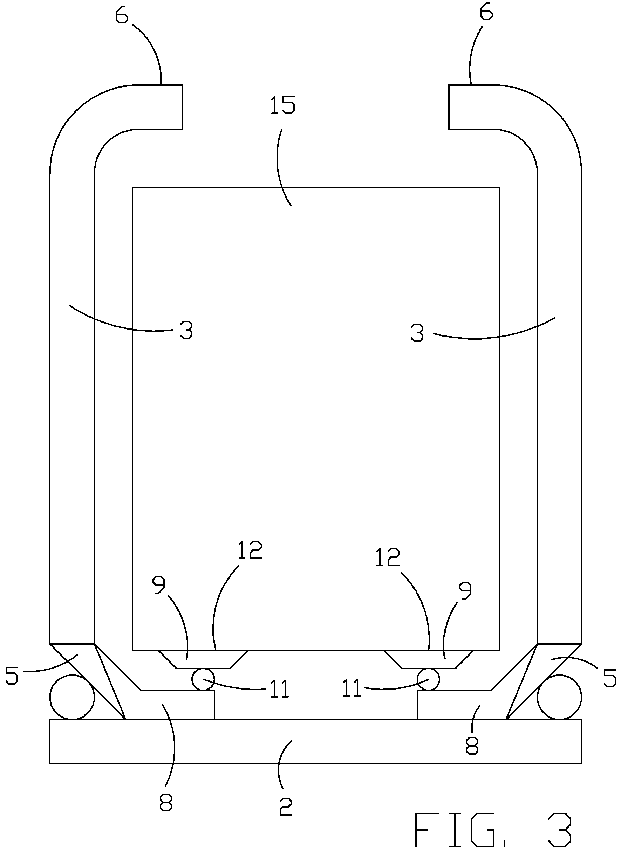

Each of the uprights 3 is rotatable, by means of the respective pin 5, between a first stacking position, shown in Figures 1 and 3, and a second loading position, shown in Figure 2.

When all the uprights 3 are in the stacking position, the bases 6 are placed at the vertices of a first quadrilateral lying on a substantially horizontal plane (i.e. substantially arranged horizontally during the use of structure 1), respectively. Said first quadrilateral preferably is a rectangle arranged with the sides thereof parallel to the sides of the rectangle with which base 2 may be schematized, respectively. When one of the uprights 3 is in the stacking position, the respective arm 8, on the side opposite to that where the latter is connected to base 9, preferably abuts against base 2 on the side opposite to that where the latter can rest on a flat surface. In addition, when one of the uprights 3 is in the stacking position, the arm along the letter "L" schematizing said upright 3 is preferably arranged orthogonally to base 2 and is raised from the latter on the side opposite to that where the aforementioned support points lie (i.e. on the side opposite to that where base 2 can rest on the ground or on a flat surface). When all the uprights 3 are in the stacking position, the bases 6 therefore lie on the side of base 2 opposite to that where the above-mentioned support points lie so that, as mentioned above, if a plurality of structures 1 is arranged, the latter can be stacked one on another by resting base 2 of a structure 1 (at least at the above-mentioned support points of the latter) on the bases 6 of the underlying structure 1.

As shown in Figure 1, when all the uprights 3 are in the stacking position, also the bases 9, and more specifically the surfaces 12, are placed at the vertices of a first quadrilateral lying on a substantially horizontal plane, respectively. Preferably, said quadrilateral at which vertices the bases 9 are placed when all the uprights 3 are in the stacking position also is a rectangle arranged with the sides thereof parallel to the sides of the rectangle with which base 2 may be schematized, respectively.

When all the uprights 3 are in the loading position, the bases 9, and more specifically the surfaces 12, are placed at the vertices of a second quadrilateral lying on a substantially horizontal plane (i.e. substantially arranged horizontally during the use of structure 1), respectively. Said second quadrilateral preferably is a rectangle arranged with the sides thereof parallel to the sides of the rectangle with which base 2 may be schematized, respectively. When one of the uprights 3 is in the loading position, the respective arm 8 is preferably raised from base 2. In addition, when the uprights 3 are in the loading position, the arms along the letters "L" schematizing the uprights 3 preferably are two-by-two diverging away from base 2 on the side opposite to that where the aforementioned support points lie (i.e. on the side opposite to that where base 2 can rest on the ground on a flat surface). Due to this, when all the uprights 3 are in the loading position, a quadrilateral having four points as vertices which can be obtained by projecting the bases 6 orthogonally on said plane where said second quadrilateral lies (at the vertices of which the bases 9 and more specifically, the surfaces 12 are placed) contains said second quadrilateral therein. When all the uprights 3 are in the loading position, the bases 9 therefore lie on the side of base 2 opposite to that where the above-mentioned support points lie so that, as mentioned above, an object, such as a movable container, can be accommodated in structure 1 resting on the bases 9, and more specifically on the surfaces 12.

The position of pin 5 with respect to the bases 6 and 9, and more specifically with respect to base 6 and to surface 12, in each of the uprights 3 is such that each upright 3, in conjunction with arm 8 and pin 5 to which it is connected, serve as first class lever to supporting an object on base 9, and more specifically on surface 12, when the uprights 3 are in the loading position. Pin 5 in each upright 3 serves i.e. as a fulcrum of the aforesaid lever, so that supporting an object, such as a movable container, on the bases 9, and more specifically on the surfaces 12, when the uprights 3 are in said loading position generates, due to the weight of said object, for each of the uprights 3, a torque tending to rotate said upright 3, by means of pin 5 thereof, from the loading position to the stacking position. In addition to the foregoing, the bases 6 are positioned so that when all the uprights 3 are in the stacking position and another structure 1 (if a plurality of structures 1 is arranged) rests on the bases 6, the weight of said other structure 1 on the bases 6 generates, for each of the uprights 3, a torque tending to keep said upright 3 in the stacking position. The bases 9, and more specifically the surfaces 12, are positioned so that when the uprights 3 are in the stacking position and an object, such as a movable container, for example, rests on the bases 9, and more specifically on the surfaces 12, the weight of said object on the bases 9 generates, for each of the uprights 3, a torque tending to keep said upright 3 in the stacking position.

Incidentally, so base 2 of a structure 1 can rest on the bases 6 of the underlying structure 1 when all the uprights of the latter are in the stacking position, and so an object, such as a movable container, for example, can be accommodated in structure 1 resting on the bases 9 when all the uprights 3 are in the loading position, it is sufficient for structure 1 to comprise three uprights 3 connected to base 2 so that: when all three uprights 3 are in the stacking position, the bases 6 are placed at the vertices of a first triangle lying on a substantially horizontal plane, respectively; when all three uprights 3 are in the loading position, the bases 9, and more specifically the surfaces 12, are placed at the vertices of a second triangle lying on a substantially horizontal plane, respectively; and when all three uprights 3 are in the loading position, a triangle having three points as vertices which can be obtained by projecting the bases 6 orthogonally on said plane where said second triangle lies (at the vertices of which the bases 9 are placed) contains said second triangle therein.

**Figure** 2 shows structure 1 resting on a horizontal surface, with the uprights 3 in the loading position and upon accommodating a movable container 15 therein. The latter rests on the bases 9 at the surfaces 12. As mentioned above, since the weight of each base 9 preferably is such that in the absence of an object resting on said base 9, the latter rotates, due to the weight thereof and by means of pin 11, with respect to arm 8 to which it is connected, so as to orient surface 12 horizontally while directing it towards the opposite side with respect to base 2 (i.e. upwards), when container 15 rests on the bases 9, the surfaces 12 face upwards and are arranged horizontally.

Due to the weight of container 15 (serving as "applied force" in the lever mentioned above), the uprights 3 rotate from the loading position to the stacking position, abutting the arms 8 against base 2 and positioning the bases 6 above container 15. As shown in **Figure 3****,** at the end of said rotation, container 15 is "enclosed" in structure 1. If a plurality of structures 1 is arranged, a second structure 1 can therefore rest on the bases 6 of structure 1 shown in Figure 3. In light of the foregoing, structure 1 allows stacking objects which are not stackable per se, such as movable containers, for example.

The uprights 3 are preferably shaped so that when they are in the stacking position and another structure 1 rests on the bases 6, the torque generated, for each upright 3, by the weight of said other structure according to the present invention on the bases 6 presses arm 8 connected to said upright 3 against base 2. As shown in Figure 3, the uprights 3 further preferably are shaped so that when they are in the stacking position and an object, such as container 15, rests on the bases 9, and more specifically on the surfaces 12, the torque generated, for each upright 3, by the weight of the object on the bases 9 presses arm 8 connected to said upright 3 against base 2. The arms 8 therefore serve as stops which block the rotation of the uprights 3 when the latter, rotating from the loading position, reach the stacking position.

Structure 1 may comprise, for each upright 3, one or more stops which block the rotation of said upright 3 when the latter, rotating from the loading position, reaches the stacking position, and/or one or more stops which block the rotation of said upright 3 when the latter, rotating from the stacking position, reaches the loading position.

Preferably, but not necessarily, each pin 5 slides along the axis about which upright 3 to which it is connected is rotatable with respect to base 2. In this case, each pin 5 comprises a guide means adapted to allow a translation of upright 3 to which it is connected along the axis about which the latter is rotatable with respect to base 2. This advantageously allows adjusting the position of the uprights 3 with respect to base 2.

Preferably, but not necessarily, each upright 3 is shaped so that, when in said stacking position, the weight of said upright 3 is such as to generate a torque tending to rotate said upright 3, by means of the respective pin 5, from the stacking position to the loading position. Preferably, the weight of each upright 3 further is such that when said upright 3 is in the stacking position, in the absence of an object resting on the bases 9, said upright 3 rotates, due to the weight thereof and by means of pin 5 thereof, from the stacking position to the loading position. In this case, advantageously, when structure 1 accommodates an object therein (resting on the bases 9) having sufficient weight to keep the uprights 3 in the stacking position, when said object is removed from structure 1, the uprights 3 rotate due to the weight thereof, from the stacking position to the loading position.

Structure 1 may comprise, for each upright 3, one or more actuators adapted to rotate, when needed, said upright 3 between the loading position and the stacking position. Said actuators may comprise, by way of example, gears actuated by an electric engine or hydraulic or pneumatic cylinders actuated by a pump or compressor, respectively. The design of said actuators for moving the uprights 3, as well as the connection thereof to the other components of structure 1, are within the grasp of a skilled technician. Therefore, further details are not provided.

Structure 1 may further comprise, for each upright 3, one or more springs connected to said upright 3 so as to elastically oppose a rotation of the latter from the loading position to the stacking position or vice versa. Designing said springs, like the connection thereof to the other components of structure 1, are within the grasp of a skilled technician. Therefore, further details are not provided.

Based on the description provided for a preferred exemplary embodiment, it is obvious that certain changes may be introduced by those skilled in the art without departing from the scope of the invention as defined by the following claims.

## Claims

1. A structure (1) for stacking objects, said structure (1) being **characterized in that** it comprises:
• a base (2) including at least three support points lying on a substantially horizontal plane and at which said base (2) can rest on a flat surface;
• at least three uprights (3) each of which connected to said base (2) by means of first connection means (5), at a first end (4) thereof, each of said uprights (3) comprising a first support base (6) at a second end (7) of said upright (3) opposite to said first end (4);
• for each of said uprights (3), said first connection means (5) being adapted to allow a rotation of said upright (3) with respect to said base (2) about a substantially horizontal axis;
• for each of said uprights (3), an arm (8) protruding from said upright (3) and integrally connected to the latter at a first end thereof;
• for each of said arms (8), a second support base (9, 12) connected to said arm (8) at a second end (10) of the latter (8) opposite to the first end of said arm (8);
each of said uprights (3) being rotatable by means of said first connection means (5), between:
• a first stacking position in which, when all said uprights (3) are in said stacking position, said first support bases (6) are placed at the vertices of a first triangle lying on a substantially horizontal plane, respectively, each of said uprights (3) being connected to said base (2) by means of said first connection means (5), so that, when all said uprights (3) are in said stacking position, said first support bases (6) lie on an opposite side of said base (2) with respect to said support points, so that, when all said uprights (3) are in said stacking position, another structure according to the present claim can rest on said first support bases (6) at least at said support points of the base of said other structure,
and
• a second loading position, in which, when all said uprights (3) are in said loading position, said second support bases (9, 12) are placed at the vertices of a second triangle lying on a substantially horizontal plane, respectively, so that an object (15) can be accommodated in said structure (1), between said uprights (3), resting on said second support bases (9, 12),
when all said uprights (3) are in said loading position, said first and second support bases (6, 9, 12) also being positioned so that a triangle having three points as vertices, which are obtainable by projecting said first support bases (6) orthogonally on said plane where said second triangle lies, contains said second triangle therein,
in each of said uprights (3), said first connection means (5) being positioned with respect to said first and second support bases (6, 9, 12), so that said upright (3), with the arm (8) thereof and the first connection means (5) thereof, acts as a first class lever for supporting an object (15) on said second support base (9, 12), when all said uprights (3) are in said loading position,
in each of said uprights (3), said first connection means (5) acting as a fulcrum of said lever, so that supporting an object (15) on said second support bases (9, 12) when all said uprights (3) are in said loading position generates, due to the weight of said object (15) and for each of said uprights (3), a torque tending to rotate said upright (3), by means of said first connection means (5), from said loading position to said stacking position,
when all said uprights (3) are in said stacking position, said first support bases (6) being positioned so that, when another structure according to the present claim rests on said first support bases (6), the weight of said other structure on said first support bases (6) generates, for each of said uprights (3), a torque tending to keep said upright (3) in said stacking position,
when all said uprights (3) are in said stacking position, said second support bases (9, 12) being positioned so that, when an object (15) rests on said second support bases (9, 12), the weight of said object (15) on said second support bases (9, 12) generates, for each of said uprights (3), a torque tending to keep said upright (3) in said stacking position.

2. A structure (1) according to claim 1, **characterized in that**, for each of said uprights (3), said first connection means (5) comprise guide means adapted to allow a translation of said upright (3), with respect to said base (2), along said axis about which said upright (3) is rotatable with respect to said base (2) by means of said first connection means (5).

3. A structure (1) according to one of the preceding claims, **characterized in that** it comprises, for each of said arms (8), second connection means (11) by means of which said arm (8) is connected to the respective second support base (9, 12),
said second connection means (11) being adapted to allow a rotation of said second support base (9, 12) with respect to said arm (8) about a substantially horizontal axis.

4. A structure (1) according to claim 3, **characterized in that** each of said second support bases (9) comprises a flat support surface (12) at which an object (15) can rest on said second support base (9),
when all said uprights (3) are in said loading position, said support surfaces (12) being placed at the vertices of said second triangle, respectively,
each of said second support bases (9) being shaped so that the weight of said second support base (9) is such as to generate a torque tending to rotate said second support base (9), by means of said second connection means (11), with respect to the arm (8) to which it is connected, so as to orient said support surface (12) horizontally while directing it towards the opposite side with respect to said base (2),
the weight of each of said second support bases (9) further being such that, in the absence of an object (15) resting on said second support base (9), the latter rotates, due to the weight thereof and by means of said second connection means (11), with respect to the arm (8) to which it is connected, so as to orient said support surface (12) horizontally while directing it towards the opposite side with respect to said base (2).

5. A structure (1) according to one of the preceding claims, **characterized in that** said axes about which said uprights (3) are rotatable with respect to said base (2) by means of said first connection means (5) lie on the same plane parallel to said plane on which said three support points of the base (3) lie.

6. A structure (1) according to claim 5, **characterized in that** said axes about which two of said uprights (3) are rotatable with respect to said base (2) by means of said first connection means (5) are coincident.

7. A structure (1) according to claim 5 or 6, **characterized in that** said axes about which said uprights (3) are rotatable with respect to said base (2) by means of said first connection means (5) are mutually parallel.

8. A structure (1) according to claim 7 when depending on claim 6, **characterized in that** it comprises a first, a second, a third and a fourth of said uprights (3),
said axes about which said first and second uprights (3) are rotatable with respect to said base (2) by means of said first connection means (5) being coincident,
said axes about which said third and said fourth uprights (3) are rotatable with respect to said base (2) by means of said first connection means (5) being coincident,
when all said uprights (3) are in said stacking position, said first support bases (2) being placed at the vertices of a first quadrilateral lying on a substantially horizontal plane, respectively,
when all said uprights (3) are in said loading position, said second support bases (9, 12) being placed at the vertices of a second quadrilateral lying on a substantially horizontal plane, respectively,
when all said uprights (3) are in said loading position, a quadrilateral having four points as vertices which are obtainable by projecting said first support bases (6) orthogonally on said plane where said second quadrilateral lies contains said second quadrilateral therein.

9. A structure (1) according to one of the preceding claims, **characterized in that**, in each of said uprights (3), said arm (8) is shaped and arranged so as to abut against said base (2) when said upright (3) is in said stacking position, when all said uprights (3) are in said stacking position and another structure according to one of the preceding claims rests on said first support bases (6), said torque generated, for each of said uprights (3), by the weight of said other structure according to one of the preceding claims on said first support bases (6), pressing said arm (8) against said base (2),
when all said uprights (3) are in said stacking position and an object (15) rests on said second support bases (9, 12), said torque generated, for each of said uprights (3), by the weight of said object (15) on said second support bases (9, 12) pressing said arm (8) against said base (2).

10. A structure (1) according to one of the preceding claims, **characterized in that** each of said uprights (3) is shaped so that, when in said stacking position, the weight of said upright (3) is such as to generate a torque tending to rotate said upright (3), by means of said first connection means (5), from said stacking position to said loading position,
the weight of each of said uprights (3) further being such that, when said upright (3) is in said stacking position, in the absence of an object (15) resting on said second support bases (9, 12), said upright (3) rotates, due to the weight thereof and by means of said first connection means (5), from said stacking position to said loading position.

## Patentansprüche

1. Struktur (1) zum Stapeln von Gegenständen, wobei die Struktur (1) **dadurch gekennzeichnet ist, dass** sie umfasst:
• eine Basis (2) mit mindestens drei Stützpunkten, die auf einer im Wesentlichen horizontalen Ebene liegen und an der die Basis (2) auf einer ebenen Fläche ruhen kann;
• mindestens drei Pfosten (3), von denen jeder an einem ersten Ende (4) mittels erster Verbindungsmittel (5) mit der Basis (2) verbunden ist, wobei jeder der Pfosten (3) eine erste Stützbasis (6) bei einem zweiten Ende (7) des Pfostens (3) gegenüber dem ersten Ende (4) aufweist;
• für jeden der Pfosten (3) die ersten Verbindungsmittel (5), wobei die ersten Verbindungsmittel (5) so ausgelegt sind, dass sie eine Drehung des Pfostens (3) in Bezug auf die Basis (2) um eine im Wesentlichen horizontale Achse ermöglichen;
• für jeden der Pfosten (3) einen Arm (8), der von dem Pfosten (3) vorsteht und an einem ersten Ende davon integral mit letzterem verbunden ist;
• für jeden der Arme (8) eine zweite Stützbasis (9, 12), die mit dem Arm (8) an einem zweiten Ende (10) des letzteren (8) gegenüber dem ersten Ende des Arms (8) verbunden ist; wobei jeder der Pfosten (3) mittels der ersten Verbindungsmittel (5) drehbar ist zwischen:
• einer ersten Stapelposition, in der, wenn sich alle Pfosten (3) in der Stapelposition befinden, werden die ersten Stützbasen (6) an den Eckpunkten eines ersten Dreiecks platziert, das jeweils auf einer im Wesentlichen horizontalen Ebene liegt, wobei jeder der Pfosten (3) mittels der ersten Verbindungsmittel (5) mit der Basis (2) verbunden ist, so dass, wenn alle die genannten Pfosten (3) sich in der genannten Stapelposition befinden, liegen die genannten ersten Stützbasen (6) in Bezug auf die genannten Stützpunkte auf einer gegenüberliegenden Seite der genannten Basis (2), so dass, wenn sich alle genannten Pfosten (3) in der genannten Stapelposition befinden, kann eine andere Struktur gemäß dem vorliegenden Anspruch auf den ersten Stützbasen (6) zumindest an den Stützpunkten der Basis der anderen Struktur ruhen, und
• eine zweite Ladeposition, in der, wenn sich alle Pfosten (3) in der Ladeposition befinden, werden die zweiten Stützbasen (9, 12) an den Eckpunkten eines zweiten Dreiecks, das jeweils auf einer im Wesentlichen horizontalen Ebene liegt, platziert, so dass ein Gegenstand (15) in der Struktur (1) zwischen den Pfosten (3) untergebracht werden kann und auf den zweiten Stützbasen (9, 12) ruht, wobei sich alle Pfosten (3) in der Ladeposition befinden, wobei die ersten und zweiten Stützbasen (6, 9, 12) ebenfalls so positioniert sind, dass ein Dreieck mit drei Spitzen als Eckpunkten entsteht, die durch Vorstehen der ersten Stützbasen (6) orthogonal auf der Ebene, in der das zweite Dreieck liegt, erhalten werden können, das zweite Dreieck darin in jedem der Pfosten (3) enthält, wobei die ersten Verbindungsmittel (5) in Bezug auf die ersten und zweiten Stützbasen (6, 9, 12) so positioniert sind, dass der Pfosten (3) mit ihrem Arm (8) und dem ersten Verbindungsmittel (5) als Hebel erster Klasse wirkt, zum Tragen eines Gegenstands (15) auf der zweiten Stützbasis (9, 12), wenn sich alle Pfosten (3) in der Ladeposition befinden, wobei in jedem der Pfosten (3) die ersten Verbindungsmittel (5) als Drehpunkt des Hebels wirken, so dass sie einen Gegenstand (15) auf der zweiten Stützbasis (9, 12) unterstützen, wenn sich alle Pfosten (3) in der Ladeposition befinden, wird aufgrund des Gewichts des Gegenstands (15) und für jeden der Pfosten (3) ein Drehmoment erzeugt, das dazu neigt, den Pfosten (3) zu drehen, wobei mittels der ersten Verbindungsmittel (5) wird er von der Ladeposition in die Stapelposition verlagert, wenn sich alle Pfosten (3) in der Stapelposition befinden, wobei die ersten Stützbasen (6) so positioniert sind, dass, wenn eine andere Struktur gemäß dem vorliegenden Anspruch auf den ersten Stützbasen (6) ruht, erzeugt das Gewicht der anderen Struktur auf den ersten Stützbasen (6) für jeden der Pfosten (3) ein Drehmoment, das dazu neigt, den Pfosten (3) in der Stapelposition festzuhalten, wenn sich alle Pfosten (3) in der Stapelposition befinden, wobei die zweiten Stützbasen (9, 12) so positioniert sind, dass, wenn ein Gegenstand (15) auf den zweiten Stützbasen (9, 12) ruht, erzeugt das Gewicht des Gegenstands (15) auf den zweiten Stützbasen (9, 12) für jeden der Pfosten (3) ein Drehmoment, das dazu dient, den Pfosten (3) in der Stapelposition zu halten.

2. Struktur (1) nach Anspruch 1, **dadurch gekennzeichnet, dass** die ersten Verbindungsmittel (5) für jeden der Pfosten (3) Führungsmittel umfassen, die dazu ausgelegt sind, eine Verschiebung des Pfostens (3) in Bezug auf die Basis (2) entlang der Achse zu ermöglichen, um die der Pfosten (3) in Bezug auf die Basis (2) mittels der ersten Verbindungsmittel (5) drehbar ist.

3. Struktur (1) nach einem der vorhergehenden Ansprüche, **dadurch gekennzeichnet, dass** sie für jeden der Arme (8) zweite Verbindungsmittel (11) umfasst, mittels derer der Arm (8) mit der jeweiligen zweiten Stützbasis (9, 12) verbunden ist, wobei die zweiten Verbindungsmittel (11) angepasst sind, um eine Drehung der zweiten Stützbasis (9, 12) in Bezug auf den Arm (8) um eine im Wesentlichen horizontale Achse zu ermöglichen.

4. Struktur (1) nach Anspruch 3, **dadurch gekennzeichnet, dass** jede der zweiten Stützbasen (9) eine ebene Stützfläche (12) aufweist, auf der ein Gegenstand (15) auf der zweiten Stützbasis (9) ruhen kann, wenn alle Pfosten (3) sich in der genannten Ladeposition befinden, wobei die genannten Stützflächen (12) jeweils an den Eckpunkten des genannten zweiten Dreiecks platziert sind, wobei jede der genannten zweiten Stützbasen (9) so geformt ist, dass sie das Gewicht der genannten zweiten Stützbasis (9) trägt und so beschaffen ist, dass es ein Drehmoment erzeugt, das dazu neigt, die zweite Stützbasis (9) mittels der zweiten Verbindungsmittel (11) in Bezug auf den Arm (8), mit dem sie verbunden ist, zu drehen, um sie auszurichten, wobei die Stützfläche (12) horizontal ausgerichtet wird, während sie in Bezug auf die Basis (2) auf die entgegengesetzte Seite gerichtet wird, wobei das Gewicht jeder der zweiten Stützbasen (9) außerdem so ist, dass in Abwesenheit eines Gegenstands (15) auf der zweiten Stützbasis (9) ruhend, dreht sich diese aufgrund ihres Gewichts und mittels der zweiten Verbindungsmittel (11) in Bezug auf den Arm (8), mit dem sie verbunden ist, um diese Stützfläche (12) horizontal ausrichten und wobei sie auf die gegenüberliegende Seite in Bezug auf die Basis (2) gerichtet wird.

5. Struktur (1) nach einem der vorhergehenden Ansprüche, **dadurch gekennzeichnet, dass** die Achsen, um die die Pfosten (3) in Bezug auf die Basis (2) mittels der ersten Verbindungsmittel (5) drehbar sind, in derselben Ebene parallel zu der Ebene liegen, auf der die drei Stützpunkte der Basis (3) liegen.

6. Struktur (1) nach Anspruch 5, **dadurch gekennzeichnet, dass** die Achsen, um die zwei der Pfosten (3) in Bezug auf die Basis (2) drehbar sind, mittels der ersten Verbindungsmittel (5) zusammenfallen.

7. Struktur (1) nach Anspruch 5 oder 6, **dadurch gekennzeichnet, dass** die Achsen, um die die Pfosten (3) in Bezug auf die Basis (2) mittels der ersten Verbindungsmittel (5) drehbar sind, zueinander parallel sind.

8. Struktur (1) nach Anspruch 7 in Abhängigkeit von Anspruch 6, **dadurch gekennzeichnet, dass** sie ein erstes, ein zweites, ein drittes und ein viertes der genannten Pfosten (3) umfasst, wobei die genannten Achsen die genannten ersten und zweiten Pfosten (3) mittels der ersten Verbindungsmittel (5) in Bezug auf die Basis (2) drehbar sind, wobei die Achsen, um die der dritte und vierte Pfosten (3) in Bezug auf die Basis (2) drehbar sind, durch die ersten Verbindungsmittel (5) zusammenfallen, wenn sich alle Pfosten (3) in der Stapelposition befinden, wobei die ersten Stützbasen (2) an den Eckpunkten eines ersten Vierecks platziert sind, das auf einer im Wesentlichen horizontalen Ebene liegt, wenn sich alle Pfosten (3) in der Ladeposition befinden, wobei die zweiten Stützbasen (9, 12) an den Eckpunkten eines zweiten Vierecks platziert sind, das jeweils auf einer im Wesentlichen horizontalen Ebene liegt, wenn alle Pfosten (3) sich in der Ladeposition befinden und ein Viereck mit vier Punkten als Eckpunkten, die durch orthogonales Projizieren der ersten Stützbasen (6) auf die Ebene, in der das zweite Viereck liegt, erhältlich sind, das zweite Viereck darin enthält.

9. Struktur (1) nach einem der vorhergehenden Ansprüche, **dadurch gekennzeichnet, dass** in jedem der Pfosten (3) der Arm (8) so geformt und angeordnet ist, dass er an der Basis (2) anliegt, wenn der Pfosten (3) sich in der Stapelposition befindet, wenn sich alle Pfosten (3) in der Stapelposition befinden und eine andere Struktur nach einem der vorhergehenden Ansprüche auf den ersten Stützbasen (6) ruht, wobei für jeden der Pfosten (3) das Drehmoment erzeugt wird, indem das Gewicht der anderen Struktur nach einem der vorhergehenden Ansprüche auf den ersten Stützbasen (6) den Arm (8) gegen die Basis (2) drückt, wenn sich alle Pfosten (3) in ihren Stapelposition befinden und ein Gegenstand (15) auf den zweiten Stützbasen (9, 12) ruht, wobei das Drehmoment für jeden der Pfosten (3) dadurch erzeugt wird, dass das Gewicht des Gegenstands (15) auf den zweiten Stützbasen (9, 12) den Arm (8) gegen die Basis (2) drückt.

10. Struktur (1) nach einem der vorangehenden Ansprüche, **dadurch gekennzeichnet, dass** jeder der Pfosten (3) so geformt ist, dass in der Stapelposition das Gewicht des Pfostens (3) so groß ist, dass dadurch ein Drehmoment erzeugt wird, das dazu neigt, den Pfosten (3) mittels der ersten Verbindungsmittel (5) von der Stapelposition in die Ladeposition zu drehen, wobei das Gewicht jedes Pfostens (3) außerdem so ist, dass, wenn der Pfosten (3) sich in der Stapelposition befindet und kein Gegenstand (15) auf den zweiten Stützbasen (9, 12) ruht, dreht sich der Pfosten (3) aufgrund seines Gewichts und mittels der ersten Verbindungsmittel (5), von der Stapelposition zur Ladeposition.

## Revendications

1. Structure (1) pour empiler des objets, ladite structure (1) étant **caractérisée en ce qu'**elle comprend :
• une base (2) comprenant au moins trois points d'appui situés sur un plan sensiblement horizontal et au niveau desquels ladite base (2) peut reposer sur une surface plane ;
• au moins trois montants (3) dont chacun est relié à ladite base (2) par de premiers moyens de connexion (5), à une première extrémité (4) de celle-ci,
chacun desdits montants (3) comprenant une première base d'appui (6) à une deuxième extrémité (7) dudit montant (3) opposée à ladite première extrémité (4) ;
• pour chacun desdits montants (3) lesdits premiers moyens de connexion (5) étant adaptés pour permettre une rotation dudit montant (3) par rapport à ladite base (2) autour d'un axe sensiblement horizontal;
• pour chacun desdits montants (3), un bras (8) dépassant dudit montant (3) et relié solidairement à ce dernier à une première extrémité de celui-ci ;
• pour chacun desdits bras (8), une deuxième base d'appui (9, 12) est reliée audit bras (8) à une deuxième extrémité (10) de ce dernier (8) opposée à la première extrémité dudit bras (8) ; chacun desdits montants (3) pouvant tourner par lesdits premiers moyens de connexion (5), entre :
• une première position d'empilage dans laquelle, lorsque tous lesdits montants (3) se trouvent dans ladite position d'empilage, lesdites premières bases d'appui (6) sont placées respectivement aux sommets d'un premier triangle s'étendant sur un plan sensiblement horizontal, chacun desdits montants (3) étant relié à ladite base (2) par lesdits premiers moyens de connexion (5), de sorte que, lorsque tous lesdits montants (3) se trouvent dans ladite position d'empilage, lesdites premières bases d'appui (6) se trouvent sur un côté opposé de ladite base (2) par rapport auxdits points d'appui, de sorte que, lorsque tous lesdits montants (3) se trouvent dans ladite position d'empilage, une autre structure selon la présente revendication peut reposer sur lesdites premières bases d'appui (6) au moins au niveau desdits points d'appui de la base de ladite autre structure, et
• une deuxième position de chargement, dans laquelle, lorsque tous lesdits montants (3) se trouvent dans ladite position de chargement, lesdites deuxièmes bases d'appui (9, 12) sont placées aux sommets d'un deuxième triangle s'étendant respectivement sur un plan sensiblement horizontal, de sorte qu'un objet (15) puisse être logé respectivement dans ladite structure (1), entre lesdits montants (3), reposant sur lesdites deuxièmes bases d'appui (9, 12), lorsque tous lesdits montants (3) se trouvent dans ladite position de chargement, lesdites première et deuxièmes bases d'appui (6, 9, 12) étant également positionnées de telle sorte qu'un triangle ayant trois points comme sommets, qui peuvent être obtenus en projetant lesdites premières bases d'appui (6) orthogonalement audit plan où se trouve ledit deuxième triangle, contient ledit deuxième triangle, dans chacun desdits montants (3), lesdits premiers moyens de connexion (5) étant positionnés par rapport auxdites première et deuxième bases d'appui (6, 9, 12), de sorte que ledit montant (3), avec son bras (8) et ses premiers moyens de connexion (5), agit comme un levier de première classe pour supporter un objet (15) sur ladite deuxième base d'appui (9, 12), lorsque tous lesdits montants (3) se trouvent dans ladite position de chargement, dans chacun desdits montants (3), ledit premier moyen de connexion (5) faisant office de point d'appui dudit levier, de manière à supporter un objet (15) sur lesdites bases d'appui (9, 12) lorsque tous lesdits montants (3) se trouvent dans ladite position de chargement génère, du fait du poids dudit objet (15) et pour chacun desdits montants (3), un couple tendant à faire tourner ledit montant (3), par lesdits premiers moyens de liaison (5), depuis ladite position de chargement jusqu'à ladite position d'empilage, lorsque tous lesdits montants (3) se trouvent dans ladite position d'empilage, lesdites premières bases d'appui (6) étant positionnées de telle sorte que, lorsqu'une autre structure selon la présente revendication repose sur lesdites premières bases d'appui (6), le poids de ladite autre structure sur lesdites premières bases d'appui (6) génère, pour chacun desdits montants (3), un couple tendant à maintenir ledit montant (3) dans ladite position d'empilage, lorsque tous lesdits montants (3) se trouvent dans ladite position d'empilage, lesdites deuxièmes bases d'appui (9, 12) étant positionnées de telle sorte que, lorsqu'un objet (15) repose sur lesdites deuxièmes d'appui (9, 12), le poids dudit objet (15) sur lesdites deuxièmes bases d'appui (9, 12) génère, pour chacun desdits montants (3), un couple tendant à maintenir ledit montant (3) dans ladite position d'empilage.

2. Structure (1) selon la revendication 1, **caractérisée en ce que**, pour chacun desdits montants (3), lesdits premiers moyens de connexion (5) comprennent des moyens de guidage adaptés pour permettre une translation dudit montant (3), par rapport à ladite base (2), le long dudit axe autour duquel ledit montant (3) peut tourner par rapport à ladite base (2) par lesdits premiers moyens de connexion (5).

3. Structure (1) selon l'une des revendications précédentes, **caractérisée en ce qu'**elle comprend, pour chacun desdits bras (8), des deuxièmes moyens de connexion (11) au moyen desquels ledit bras (8) est relié à la deuxième base d'appui respective (9, 12), lesdits deuxièmes moyens de connexion (11) étant adaptés pour permettre une rotation de ladite deuxième base d'appui (9, 12) par rapport audit bras (8) autour d'un axe sensiblement horizontal.

4. Structure (1) selon la revendication 3, **caractérisée en ce que** chacune desdites deuxièmes bases d'appui (9) comprend une surface d'appui plate (12) au niveau de laquelle un objet (15) peut reposer sur ladite deuxième base d'appui (9), lorsque tous lesdits montants (3) se trouvent dans ladite position de chargement, lesdites surfaces de support (12) étant placées respectivement aux sommets dudit deuxième triangle, chacune desdites deuxièmes baes d'appui (9) étant conformée de telle sorte que le poids de ladite deuxième base d'appui (9) est adaptée pour générer un couple tendant à faire tourner ladite deuxième base d'appui (9), par lesdits deuxièmes moyens de connexion (11), par rapport au bras (8) auquel elle est reliée, de manière à orienter ladite surface d'appui (12) horizontalement tout en la dirigeant vers le côté opposé par rapport à ladite base (2), le poids de chacune desdites deuxièmes bases d'appui (9) étant en outre tel qu'en l'absence d'un objet (15) reposant sur ladite deuxième base d'appui (9), cette dernière tourne, du fait de son poids et par lesdits deuxièmes moyens de connexion (11), par rapport au bras (8) auquel elle est reliée, de manière à orienter ladite surface d'appui (12) horizontalement tout en la dirigeant vers le côté opposé par rapport à ladite base (2).

5. Structure (1) selon l'une des revendications précédentes, **caractérisée en ce que** lesdits axes autour desquels lesdits montants (3) peuvent tourner par rapport à ladite base (2) par lesdits premiers moyens de connexion (5) se trouvent sur le même plan parallèle audit plan sur lequel se trouvent lesdits trois points d'appui de la base (3).

6. Structure (1) selon la revendication 5, **caractérisée en ce que** lesdits axes autour desquels deux desdits montants (3) peuvent tourner par rapport à ladite base (2) per lesdits premiers moyens de connexion (5) sont coïncidents.

7. Structure (1) selon la revendication 5 ou 6, **caractérisée en ce que** lesdits axes autour desquels lesdits montants (3) peuvent tourner par rapport à ladite base (2) par lesdits premiers moyens de connexion (5) sont mutuellement parallèles.

8. Structure (1) selon la revendication 7 lorsqu'elle dépend de la revendication 6, **caractérisée en ce qu'**elle comprend un premier, un deuxième, un troisième et un quatrième desdits droits montants (3), lesdits axes autour desquels lesdits premier et deuxième montants (3) peuvent tourner par rapport à ladite base (2) par lesdits premiers moyens de connexion (5) étant coïncidents, lesdits axes autour desquels lesdits troisième et quatrième montants (3) peuvent tourner par rapport à ladite base (2) par lesdits premiers moyens de connexion (5) étant coïncident, lorsque tous lesdits montants (3) se trouvent dans ladite position d'empilage, lesdites premières bases d'appui (2) étant placées aux sommets d'un premier quadrilatère s'étendant sur un plan sensiblement horizontal, respectivement, lorsque tous lesdits montants (3) se trouvent dans ladite position de chargement, lesdites deuxièmes bases d'appui (9, 12) étant placées aux sommets d'un deuxième quadrilatère se trouvant respectivement sur un plan sensiblement horizontal, lorsque tous lesdits montants (3) se trouvent dans ladite position de chargement, un quadrilatère ayant quatre points comme sommets qui peuvent être obtenus en projetant lesdites premières bases d'appui (6) orthogonalement sur ledit plan où se trouve ledit deuxième quadrilatère et contient ledit deuxième quadrilatère à son intérieur.

9. Structure (1) selon l'une des revendications précédentes, **caractérisée en ce que**, dans chacun desdits montants (3), ledit bras (8) est conformé et disposé de manière à venir en butée contre ladite base (2) lorsque ledit montant (3) se trouve dans ladite position d'empilage, lorsque tous lesdits montants (3) se trouvent dans ladite position d'empilage et une autre structure selon l'une des revendications précédentes repose sur lesdites premières bases d'appui (6), ledit couple généré, pour chacun desdits montants (3), par le poids de ladite autre structure selon l'une des revendications précédentes sur lesdites premières bases d'appui (6), pressant ledit bras (8) contre ladite base (2), lorsque tous lesdits montants (3) se trouvent dans ladite position d'empilage et un objet (15) repose sur lesdites deuxièmes bases d'appui (9, 12), ledit couple généré, pour chacun desdits montants (3), par le poids dudit objet (15) sur lesdites deuxièmes bases d'appui (9, 12) pressant ledit bras (8) contre ladite base (2).

10. Structure (1) selon l'une des revendications précédentes, **caractérisée en ce que** chacun desdits montants (3) est formé de telle sorte que, lorsqu'il se trouve dans ladite position d'empilage, le poids dudit montant (3) est tel qu'il génère un couple tendant à faire tourner ledit montant (3), par lesdits premiers moyens de connexion (5), depuis ladite position d'empilage jusqu'à ladite position de chargement, le poids de chacun desdits montants (3) étant en outre tel que, lorsque ledit montant (3) se trouve dans ladite position d'empilage, en l'absence d'objet (15) reposant sur lesdites deuxièmes bases d'appui (9, 12), ledit montant (3) tourne, du fait de son poids et par lesdits premiers moyens de connexion (5), depuis ladite position d'empilage jusqu'à ladite position de chargement.
